# EUROPÄISCHE PATENTANMELDUNG

(11) **EP 3 859 953 A1**
(43) Veröffentlichungstag der Anmeldung: **04.08.2021**
(21) Anmeldenummer: 20154886.4
(22) Anmeldetag: 31.01.2020
(51) Int. Cl.: H02K 15/02, H02K 1/20, H01F 3/02, H02K 5/02, H02K 5/20

(54) **BLECHPAKET FÜR EINE ELEKTRISCHE ROTIERENDE MASCHINE**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)

(57) **Zusammenfassung**

Die Erfindung betrifft ein Blechpaket für eine elektrische rotierende Maschine (2). Um Wirbelstromverluste zu minimieren wird vorgeschlagen, dass die elektrische rotierende Maschine (2) eine Vielzahl von Blechen (22), welche jeweils eine maximale Dicke (d) von 250 µm, insbesondere 100 µm, aufweisen und mittels eines elektrisch isolierenden Klebers (34) zu einem Blechpaket verklebt sind, wobei das Blechpaket zusammengepresst ist, wobei das zusammengepresste Blechpaket zumindest teilweise mit einem metallischen Werkstoff zur Herstellung einer Verbindung zwischen den Blechen (22) beschichtet ist, wobei die Beschichtung (26) mittels eines thermischen Spritzverfahrens hergestellt ist.

## Beschreibung

Die Erfindung betrifft ein Blechpaket für eine elektrische rotierende Maschine.

Ferner betrifft die Erfindung eine elektrische rotierende Maschine, welche mindestens derartiges Blechpaket aufweist.

Darüber hinaus betrifft die Erfindung ein Verfahren zur Herstellung eines Blechpakets für eine elektrische rotierende Maschine.

In einer elektrischen rotierenden Maschine werden Blechpakete zur Reduzierung von Wirbelstromverlusten eingesetzt. Derartige Blechpakete werden beispielsweise durch Stanzpaketieren von Einzelblechen hergestellt, wobei das Blechpaket anschließend beispielsweise durch Schweißnähte am Blechpaketrücken fixiert werden. Während des Betriebes der elektrischen rotierenden Maschine entstehende Wirbelstromverluste in einem Blechpaket sind insbesondere von der Blechdicke abhängig. Bei geringen Blechdicken und/oder dünnen Jochen sind Standardpaketierverfahren wie Stanzpaketieren und/oder Schweißen technisch zumindest herausfordernd. Darüber hinaus dürfen die magnetischen Eigenschaften der Bleche durch das Paketierverfahren nicht merklich verändert werden.

Die Offenlegungsschrift EP 3 595 148 A1 beschreibt ein Verfahren zur Herstellung einer Materiallage mit einer Lagendicke zwischen 0,5 und 500 µm mit den Schritten: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung. Die Offenlegungsschrift EP 3 373 421 A1 beschreibt eine Gehäuseeinheit für eine elektrische Maschine, insbesondere für einen PM-Servomotor, mit einem ersten Lagerschild, mit einem Zwischenflansch und mit einem ersten Statorblechpaket. Ein dünnwandiges Edelstahlgehäuse der elektrischen Maschine kann auf kostengünstige und einfache Weise dadurch erzielt werden, dass das erste Lagerschild, das Statorblechpaket und der Zwischenflansch eine gemeinsame Edelstahlbeschichtung aufweisen, die mittels eines generativen Fertigungsverfahrens erzeugt ist, wobei die Gehäuseeinheit aus dem ersten Lagerschild, dem Statorblechpaket, dem Zwischenflansch und der gemeinsamen Edelstahlbeschichtung gebildet wird.

Der Erfindung liegt die Aufgabe zugrunde, ein Blechpaket für eine elektrische rotierende Maschine mit minimalen Wirbelstromverlusten anzugeben.

Die Aufgabe wird erfindungsgemäß durch ein Blechpaket für eine elektrische rotierende Maschine aufweisend eine Vielzahl von Blechen, welche jeweils eine maximale Dicke von 250 pm, insbesondere 100 pm, aufweisen und mittels eines elektrisch isolierenden Klebers zu einem Blechpaket verklebt sind, gelöst, wobei das Blechpaket zusammengepresst ist, wobei das zusammengepresste Blechpaket zumindest teilweise mit einem metallischen Werkstoff zur Herstellung einer Verbindung zwischen den Blechen beschichtet ist, wobei die Beschichtung mittels eines thermischen Spritzverfahrens hergestellt ist.

Ferner wird die Aufgabe erfindungsgemäß durch eine elektrische rotierende Maschine gelöst, welche mindestens ein derartiges Blechpaket aufweist.

Darüber hinaus wird die Aufgabe erfindungsgemäß durch ein Verfahren zur Herstellung eines Blechpakets für eine elektrische rotierende Maschine gelöst, wobei eine Vielzahl von Blechen, welche jeweils eine maximale Dicke von 250 pm, insbesondere 100 µm, aufweisen, mittels eines elektrisch isolierenden Klebers zu einem Blechpaket verklebt werden, wobei das Blechpaket zusammengepresst wird, wobei das zusammengepresste Blechpaket zumindest teilweise mit einem metallischen Werkstoff zur Herstellung einer Verbindung zwischen den Blechen beschichtet wird, wobei die Beschichtung mittels eines thermischen Spritzverfahrens hergestellt wird.

Die in Bezug auf das Blechpaket nachstehend angeführten Vorteile und bevorzugten Ausgestaltungen lassen sich sinngemäß auf die elektrische rotierende Maschine und das Verfahren übertragen.

Der Erfindung liegt die Überlegung zugrunde, die Wirbelstromverluste in einem Blechpaket für eine elektrische rotierende Maschine zu minimieren, indem sehr dünne Bleche für das Blechpaket verwendet werden. Derartige Bleche weisen eine maximale Dicke von 250 pm, insbesondere 100 pm, auf und sind mittels eines elektrisch isolierenden Klebers zu einem Blechpaket verklebt, um einen möglichst dünnen Abstand zwischen den voneinander zu isolierenden Blechen zu erreichen. Der elektrisch isolierende Kleber ist beispielsweise als Klebe- und Isolierlack ausgeführt. Um das Blechpaket mechanisch zu stabilisieren, die einzelnen Bleche elektrisch miteinander zu verbinden und um eine möglichst gute thermische Anbindung zu erreichen, wird das Blechpaket zusammengepresst und anschließend mit einem metallischen Werkstoff zur Herstellung einer elektrischen, thermischen und mechanischen Verbindung zwischen den einzelnen Blechen beschichtet, wobei die Beschichtung mittels eines thermischen Spritzverfahrens hergestellt wird. Die Herstellung der Beschichtung beinhaltet hierbei das schichtweise, insbesondere radiale, Aufsprühen der Beschichtung auf das gepresste Blechpaket. Ein thermisches Spritzverfahrens ist ein Beschichtungsverfahren, bei dem laut der normativen Definition (DIN EN 657) Zusatzwerkstoffe, die so genannten Spritzzusätze, innerhalb oder außerhalb eines Spritzbrenners ab-, an- oder aufgeschmolzen, in einem Gasstrom in Form von Spritzpartikeln beschleunigt und auf die Oberfläche des zu beschichtenden Bauteils geschleudert werden. Die Bauteiloberfläche wird dabei, beispielsweise verglichen mit Auftragsschweißen, nicht angeschmolzen und daher nur in geringem Maße thermisch belastet. Durch ein derartiges thermisches Spritzverfahren sind auch Blechpakete beschichtbar, die aus sehr filigranen Blechen aufgebaut sind, ohne dass die einzelnen Bleche verformt, magnetisch merklich beeinflusst oder gar zerstört werden. Ferner ist die Stärke der Beschichtung durch das thermische Spritzverfahren an die jeweilige Einbausituation anpassbar.

Beispielsweise wird ein Rotorblechpaket und/oder ein Statorblechpaket für eine elektrischen rotierenden Maschine beschichtet. Insbesondere ist die Beschichtung, welche die Einzelbleche des jeweiligen Blechpakets lokal kurzschließt, radial möglichst weit von den elektromagnetisch aktiven Bauelementen, wie z.B. Spulen, entfernt. Beispielsweise ist die Beschichtung eines im Wesentlichen hohlzylindrischen Rotorblechpakets auf einer inneren Mantelfläche aufgesprüht, wobei die elektromagnetisch aktiven Bauelemente im Bereich der äußeren Mantelfläche angeordnet sind.

In einer weiteren Ausführungsform sind die Bleche aus Reineisen hergestellt. Neben den guten magnetischen Eigenschaften ist Reineisen verhältnismäßig weich und ermöglicht eine gute mechanische Verbindung mit der mittels eines thermischen Spritzverfahrens aufgetragenen Beschichtung.

Bei einer weiteren Ausgestaltung sind die Bleche mittels eines Sinterverfahrens hergestellt. Ein derartiges Sinterverfahren ermöglicht eine präzise Herstellung von sehr dünnen Blechen mit guten magnetischen Eigenschaften. Nach dem Sintervorgang ist das Material des Blechs weicher als beispielsweise das eines gestanzten Blechs aus dem gleichen Werkstoff, was eine mechanische Verbindung, mit der mittels eines thermischen Spritzverfahrens aufgetragenen Beschichtung verbessert.

Besonders vorteilhaft ist die Beschichtung mittels Kaltgasspritzen hergestellt. Beim Kaltgasspritzen handelt es sich um ein thermisches Spritzverfahren, wobei die Spritzpartikel auf eine so hohe Geschwindigkeit beschleunigt werden, dass sie im Gegensatz zu anderen thermischen Spritzverfahren auch ohne vorangehendes An- oder Aufschmelzen beim Aufprall auf das Substrat eine dichte und fest haftende Schicht bilden. Da das mittels Kaltgasspritzen aufgetragene Material nicht geschmolzen, sondern durch seine kinetische Energie verformt wird, ist die Bauteiloberfläche des Blechpakets, im Vergleich zu anderen thermischen Spritzverfahren, nur sehr geringen Temperaturbelastungen ausgesetzt.

In einer weiteren Ausführungsform weist der metallische Werkstoff der Beschichtung eine elektrische Leitfähigkeit von mindestens 35*10⁶ S/m und/oder eine thermische Leitfähigkeit von mindestens 200 W/(mK) auf. Derartige Werkstoffe sind beispielsweise Kupfer, Silber und Aluminium. Durch eine Verwendung derartiger Werkstoffe werden gute elektrische und thermische Eigenschaften für die Beschichtung erreicht.

Besonders vorteilhaft ist das Blechpaket mit Aluminium beschichtet. Neben einer guten elektrischen und thermischen Leitfähigkeit ermöglicht Aluminium eine zerstörungsfreie Beschichtung der dünnen, insbesondere aus Weicheisen gefertigten, Bleche des Blechpakets. Darüber hinaus ermöglicht Aluminium eine einfache spanende Nachbearbeitung, beispielsweise durch Drehen, um beispielsweise das Blechpaket an die jeweilige Einbausituation präzise anzupassen.

Bei einer weiteren Ausgestaltung liegt eine Stärke der Beschichtung im Bereich von 1 mm bis 20 mm, insbesondere 2 mm bis 3 mm. Durch eine derartige Stärke werden eine ausreichende mechanische Stabilität sowie eine ausreichende thermische und elektrische Anbindung gewährleistet.

In einer weiteren Ausführungsform sind in die Beschichtung zumindest ein Kühlkanal und/oder zumindest ein Sensor integriert. Insbesondere ist ein derartiger Kühlkanal durch ein flüssiges oder gasförmiges Kühlfluid durchströmbar, wobei durch die Integration des Kühlkanals in die Beschichtung eine effiziente Kühlung stattfindet und Bauraum eingespart wird. Ein derartiger Sensor ist beispielsweise als Temperatursensor ausgeführt, wobei durch die Integration eines Sensors Bauraum eingespart wird.

Bei einer weiteren Ausgestaltung ist das Blechpaket als Statorblechpaket ausgeführt und zumindest an einem Blechpaketrücken mit einem metallischen Werkstoff zur Herstellung einer Verbindung zwischen den Blechen beschichtet. Insbesondere wird durch die Beschichtung eine elektrische, thermische und mechanische Verbindung zwischen den Blechen hergestellt. Die Beschichtung, welche die Einzelbleche des jeweiligen Blechpakets lokal kurzschließt, ist am Blechpaketrücken radial weitestmöglich von den elektromagnetisch aktiven Bauelementen, den Statorspulen, entfernt, sodass minimale Wirbelstromverluste erzielbar sind.

In einer weiteren Ausführungsform weist die elektrische rotierende Maschine Lagerschilde auf, wobei zumindest ein Blechpaket als Statorblechpaket ausgeführt und durch die Lagerschilde zusammengepresst ist, wobei sich die Beschichtung des Statorblechpakets zumindest teilweise über die Lagerschilde erstreckt. Durch eine derartige Ausgestaltung der elektrischen rotierenden Maschine wird Bauraum eingespart.

Im Folgenden wird die Erfindung anhand der in den Figuren dargestellten Ausführungsbeispiele näher beschrieben und erläutert.

Es zeigen:
- FIG 1: eine schematische Darstellung einer ersten Ausgestaltung einer elektrischen rotierenden Maschine in einer Querschnittsdarstellung,
- FIG 2: eine schematische Darstellung einer zweiten Ausgestaltung einer elektrischen rotierenden Maschine in einer Querschnittsdarstellung,
- FIG 3: eine schematische Darstellung eines Verfahrens zur Herstellung eines Statorblechpakets und
- FIG 4: eine vergrößerte Querschnittsdarstellung eines Statorblechpakets im Bereich der Beschichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

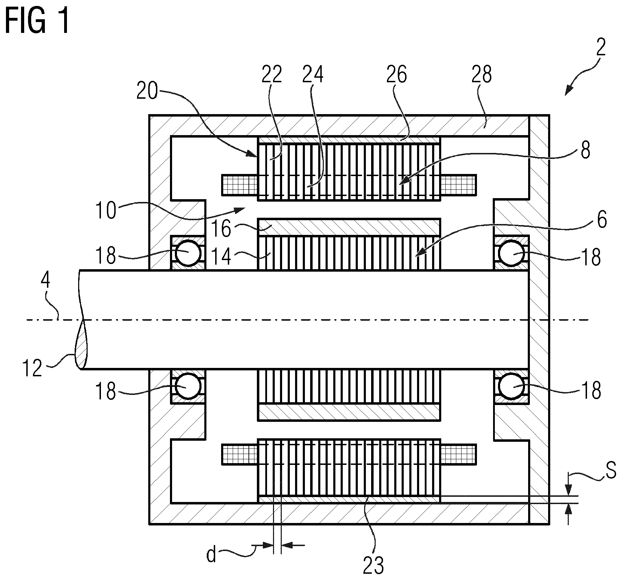

FIG 1 zeigt eine schematische Darstellung einer ersten Ausgestaltung einer elektrischen rotierenden Maschine 2 in einer Querschnittsdarstellung. Die elektrische rotierende Maschine 2, welche als Motor und/oder als Generator verwendbar ist, weist einen um eine Rotationsachse 4 rotierbaren Rotor 6 und einen Stator 8 auf, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Fluidspalt 10, der insbesondere als Luftspalt ausgeführt ist, ausgebildet.

Der Rotor 6 weist eine Welle 12 und ein Rotorblechpaket 14, welches aus einem ferromagnetischen Material, beispielsweise Stahl oder Eisen, hergestellt ist, auf, wobei das Rotorblechpaket 14 drehfest mit der Welle 12 verbunden ist. Darüber hinaus umfasst der Rotor 6 eine Mehrzahl von mit dem Rotorblechpaket 14 verbundenen Permanentmagneten 16 für einen Betrieb als Synchronmaschine. Alternativ umfasst der Rotor 6 einen Kurzschlusskäfig für einen Betrieb als Asynchronmaschine oder eine Erregerwicklung. Die Welle 12 des Rotors 6 ist über Lager 16 drehbeweglich angeordnet.

Der Stator 8 umfasst ein Statorblechpaket 20, welches lamellenförmig aus einer Vielzahl von einzelnen Blechen 22 aufgebaut ist. Ein Blechpaketrücken 23 ist im Wesentlichen zylinderförmig ausgebildet. Darüber hinaus weist das Statorblechpaket 20 ein radial außenliegendes Joch und sich vom Joch radial nach innen erstreckende Zähne auf. Zwischen den Zähnen sind Nuten ausgebildet, in denen eine Statorwicklung 24 aufgenommen ist.

Die Bleche 22 sind beispielsweise aus Reineisen hergestellt und weisen jeweils eine Dicke d im Bereich von 0,5 µm bis 250 pm, insbesondere von 0,5 µm bis 100 pm, auf. Derartig dünne Bleche 22 werden beispielsweise mittels eines Sinterverfahrens hergestellt und werden mittels eines Klebe- und Isolierlacks zu einem Statorblechpaket 20 verklebt. Der Klebe- und Isolierlack hat die Aufgabe die Bleche miteinander zu verbinden und gleichzeitig voneinander zu isolieren. Das Statorblechpaket 20 des Stators 8 weist darüber hinaus auf dem Blechpaketrücken 23 eine metallische Beschichtung 26 auf. Eine Stärke s der metallischen Beschichtung 26 liegt im Bereich von 1 mm bis 20 mm, insbesondere von 2 mm bis 3 mm.

Die Beschichtung 26 wird insbesondere mittels Kaltgasspritzen auf den Blechpaketrücken 23, insbesondere vollflächig, aufgesprüht, wobei während des Sprühvorgangs das Statorblechpaket 20 zusammengepresst wird. Geeignet für eine derartige Beschichtung 26 ist beispielsweise Aluminium, durch welches eine dichte, mechanisch feste und elektrisch leitende Verbindung zwischen den Blechen 22 herstellbar ist, ohne die dünnen Bleche 22 während des Kaltgasspritzens zu zerstören. Ferner weist die Aluminium-Beschichtung 26 eine sehr gute Anbindung an das Statorblechpaket 20 auf und stellt somit einen sehr geringen thermischen Übergangswiderstand dar. Ferner ermöglicht eine Beschichtung 26 aus Aluminium eine spanende Nachbearbeitung, beispielsweise durch Drehen. Der Rotor 6 und der Stator 8 sind in einem geschlossenen Gehäuse 28 untergebracht, wobei der Stator 8 über die Beschichtung 26 des Blechpakets 20 flächig mit dem Gehäuse verbunden ist, sodass eine sehr gute Entwärmung des Blechpakets 20 über die Beschichtung 26 zum Gehäuse 28 stattfindet.

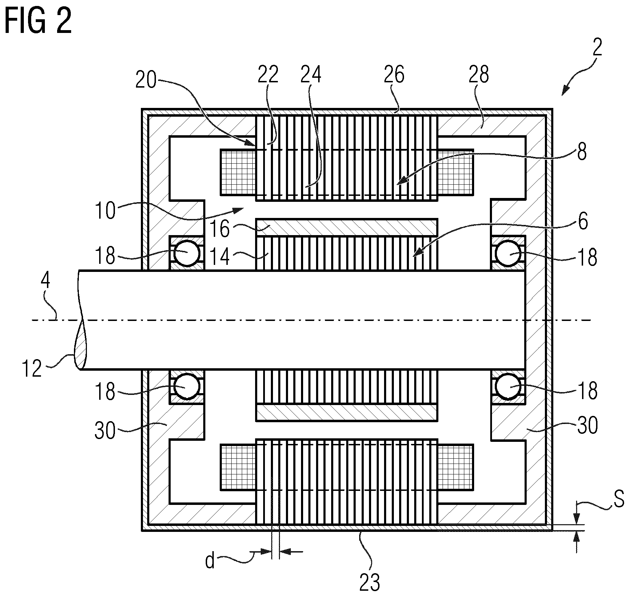

FIG 2 zeigt eine schematische Darstellung einer zweiten Ausgestaltung einer elektrischen rotierenden Maschine 2 in einer Querschnittsdarstellung. Das Gehäuse 28 umfasst zumindest zwei Lagerschilde 20, durch welche das Statorblechpaket 20 während des Sprühvorgangs zusammengepresst wird, wobei die Lagerschilde 20 zusammen mit dem Statorblechpaket 20 mittels Kaltgasspritzen beschichtet werden. Die weitere Ausführung der elektrischen rotierenden Maschine 2 in FIG 2 entspricht der Ausführung in FIG 1.

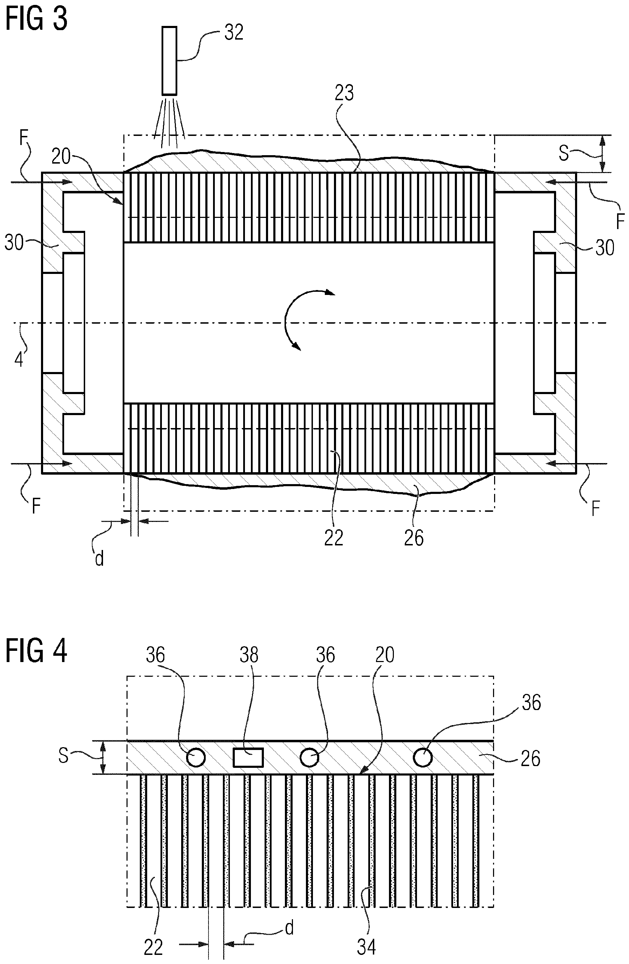

FIG 3 zeigt eine schematische Darstellung eines Verfahrens zur Herstellung eines Statorblechpakets 20. Eine Vielzahl von Blechen 22, welche jeweils eine maximale Dicke d von 250 pm, insbesondere 100 pm, aufweisen, werden mittels eines elektrisch isolierenden Klebers bündig zu einem Statorblechpaket 20 verklebt. Daraufhin wird das verklebte Statorblechpaket 20 exemplarisch mit Hilfe von Lagerschilden 30, welche Teil der elektrischen rotierenden Maschine 2 sind, mit einer Kraft F zusammengepresst. Alternativ wird das Statorblechpaket 20 von einem Werkzeug zusammengepresst, welches nicht Teil der elektrischen rotierenden Maschine 2 ist. Der Blechpaketrücken 23 des zusammengepressten Statorblechpakets 20 wird zur Herstellung einer Verbindung zwischen den Blechen 22 mittels Kaltgasspritzen mit Aluminium beschichtet. Die Aluminiumpartikel werden mit Hilfe einer Sprühvorrichtung 32 rollierend auf den im Wesentlichen zylindrischen Blechpaketrücken 23 des zusammengepressten Statorblechpakets 20 aufgesprüht. Rollierendes Aufsprühen bedeutet, dass das Statorblechpaket 20 um seine Rotationsachse gedreht wird, während die Sprühvorrichtung 32 parallel zur Rotationsachse 4, also in Axialrichtung, bewegt wird. Da die Sprühvorrichtung 32 nicht in Umfangsrichtung bewegt wird, wird gewährleistet, dass die Sprühpartikel unter einem konstanten Winkel auf den Blechpaketrücken 23 des Statorblechpakets 20 treffen. Optional wird zumindest ein Teil der Lagerschilde 30 mit beschichtet. Die weitere Ausführung des Statorblechpakets 20 in FIG 3 entspricht der Ausführung in FIG 2.

FIG 4 zeigt eine vergrößerte Querschnittsdarstellung eines Statorblechpakets 20 im Bereich der Beschichtung 26. Zwischen den Blechen ist der elektrisch isolierende Kleber 34, der als Klebe- und Isolierlack ausgeführt ist, schematisch dargestellt. Die Beschichtung 26 aus Aluminium hat eine Stärke s im Bereich von 1 mm bis 20 mm, insbesondere 2 mm bis 3 mm, wobei in die Beschichtung 26 Kühlkanäle 36 und exemplarisch ein Sensor 38 integriert sind. Der Sensor 38 ist beispielsweise als Temperatursensor ausgeführt. Die weitere Ausführung des Statorblechpakets 20 in FIG 4 entspricht der Ausführung in FIG 3.

Zusammenfassend betrifft die Erfindung ein Blechpaket für eine elektrische rotierende Maschine 2. Um Wirbelstromverluste zu minimieren wird vorgeschlagen, dass die elektrische rotierende Maschine 2 eine Vielzahl von Blechen 22, welche jeweils eine maximale Dicke d von 250 pm, insbesondere 100 pm, aufweisen und mittels eines elektrisch isolierenden Klebers 34 zu einem Blechpaket verklebt sind, wobei das Blechpaket zusammengepresst ist, wobei das zusammengepresste Blechpaket zumindest teilweise mit einem metallischen Werkstoff zur Herstellung einer Verbindung zwischen den Blechen 22 beschichtet ist, wobei die Beschichtung 26 mittels eines thermischen Spritzverfahrens hergestellt ist.

## Patentansprüche

1. Blechpaket für eine elektrische rotierende Maschine (2) aufweisend eine Vielzahl von Blechen (22), welche jeweils eine maximale Dicke (d) von 250 pm, insbesondere 100 pm, aufweisen und mittels eines elektrisch isolierenden Klebers (34) zu einem Blechpaket verklebt sind,
wobei das Blechpaket zusammengepresst ist,
wobei das zusammengepresste Blechpaket zumindest teilweise mit einem metallischen Werkstoff zur Herstellung einer Verbindung zwischen den Blechen (22) beschichtet ist,
wobei die Beschichtung (26) mittels eines thermischen Spritzverfahrens hergestellt ist.

2. Blechpaket nach Anspruch 1,
wobei die Bleche (22) aus Reineisen hergestellt sind.

3. Blechpaket nach einem der Ansprüche 1 oder 2,
wobei die Bleche (22) mittels eines Sinterverfahrens hergestellt sind.

4. Blechpaket nach einem der vorherigen Ansprüche,
wobei die Beschichtung (26) mittels Kaltgasspritzen hergestellt ist.

5. Blechpaket nach einem der vorherigen Ansprüche,
wobei der metallische Werkstoff der Beschichtung eine elektrische Leitfähigkeit von mindestens 35*10⁶ S/m und/oder eine thermische Leitfähigkeit von mindestens 200 W/(mK) aufweist.

6. Blechpaket nach einem der vorherigen Ansprüche,
wobei das Blechpaket mit Aluminium beschichtet ist.

7. Blechpaket nach einem der vorherigen Ansprüche,
wobei eine Stärke (s) der Beschichtung (26) im Bereich von 1 mm bis 20 mm, insbesondere 2 mm bis 3 mm, liegt.

8. Blechpaket nach einem der vorherigen Ansprüche,
wobei in die Beschichtung (26) zumindest ein Kühlkanal (36) und/oder zumindest ein Sensor (38) integriert sind.

9. Blechpaket nach einem der vorherigen Ansprüche,
wobei das Blechpaket als Statorblechpaket (20) ausgeführt ist und zumindest an einem Blechpaketrücken (23) mit einem metallischen Werkstoff zur Herstellung einer Verbindung zwischen den Blechen (22) beschichtet ist.

10. Elektrische rotierende Maschine (2),
welche mindestens ein Blechpaket nach einem der vorherigen Ansprüche aufweist.

11. Elektrische rotierende Maschine (2) nach Anspruch 10, welche Lagerschilde (30) aufweist,
wobei zumindest ein Blechpaket als Statorblechpaket (20) ausgeführt und durch die Lagerschilde (30) zusammengepresste ist,
wobei sich die Beschichtung (26) des Statorblechpakets (20) zumindest teilweise über die Lagerschilde (30) erstreckt.

12. Verfahren zur Herstellung eines Blechpakets (20) für eine elektrische rotierende Maschine (2),
wobei eine Vielzahl von Blechen (22), welche jeweils eine maximale Dicke (d) von 250 pm, insbesondere 100 pm, aufweisen, mittels eines elektrisch isolierenden Klebers (34) zu einem Blechpaket verklebt werden,
wobei das Blechpaket zusammengepresst wird,
wobei das zusammengepresste Blechpaket zumindest teilweise mit einem metallischen Werkstoff zur Herstellung einer Verbindung zwischen den Blechen (22) beschichtet wird,
wobei die Beschichtung (26) mittels eines thermischen Spritzverfahrens hergestellt wird.

13. Verfahren nach Anspruch 12,
wobei die Bleche (22) aus Reineisen mittels eines Sinterverfahrens hergestellt werden.

14. Verfahren nach einem der Ansprüche 12 oder 13,
wobei die Beschichtung (26) mittels Kaltgasspritzen hergestellt wird.

15. Verfahren nach einem der Ansprüche 12 bis 14,
wobei das Blechpaket als Statorblechpaket (20) ausgeführt ist,
wobei das Blechpaket mit Hilfe von Lagerschilden (30) zusammengepresst wird,
wobei das Statorblechpaket (20) zumindest an einem Blechpaketrücken (23) mit einem metallischen Werkstoff zur Herstellung einer Verbindung zwischen den Blechen (22) beschichtet wird.

16. Verfahren nach Anspruch 15,
wobei das zusammengepresste Blechpaket zusammen mit zumindest einem Teil der Lagerschilde (30) beschichtet wird.
